# EUROPÄISCHE PATENTSCHRIFT

(11) **EP 1 917 876 B1**
(45) Veröffentlichungstag und Bekanntmachung des Hinweises auf die Patenterteilung: **01.04.2009**
(21) Anmeldenummer: 07021434.1
(22) Anmeldetag: 03.11.2007
(51) Int. Cl.: A44C 9/00

(54) **Schmuckring**
Decorative ring
Anneau décoratif

(30) Priorität: 03.11.2006 DE 202006016968 U
(43) Veröffentlichungstag der Anmeldung: 07.05.2008
(73) Patentinhaber: HCF Merkle GmbH, 22529 Hamburg (DE)
(72) Erfinder: Wülfing, Matthias, 79199 Kirchzarten (DE)
(74) Vertreter: Geitz Truckenmüller Lucht

(56) Entgegenhaltungen:
- EP-A- 0 720 823
- DE-U- 7 143 314
- DE-U1- 20 305 328
- FR-A- 679 812
- US-A- 1 936 604

## Beschreibung

Die Erfindung geht aus von einem Schmuckring aus mindestens zwei Teilen mit einem Außen- und einem Innenring, welche relativ zueinander um mehrere Achsen drehbar sind.

Derartige Schmuckringe sind aus dem Stand der Technik, beispielsweise aus der DE 299 24 052 U1, bekannt. Als nachteilig erweist sich bei den bekannten Schmuckringen, dass der Innenring und der Außenring über Achsstummel, Kugel-, Gleit- oder Wälzlager derart miteinander verbunden sind, dass ein einfaches Lösen des Innenrings vom Außenring nicht möglich ist. Insbesondere kann der Träger des Schmuckrings den Innenring vom Außenring nicht ohne die Verwendung von Werkzeugen lösen. Dies schränkt die Möglichkeiten der Gestaltung und die Flexibilität des Schmuckrings ein.

Aus der DE 203 05 328 U1 ist ein Schmuckring mit einem Innenring und einem Außenring bekannt, bei dem Lagerungsfortsätze radial vom Innenring nach außen abstehen. Diese sind in einer Nut an der Innenseite des Außenrings gelagert. Innen- und Außenring können damit nicht ohne Werkzeuge voneinander gelöst werden.

Aus der FR 679 812 A ist ein Schmuckring mit einem Innenring und einem Außenring bekannt, bei dem der Innenring eine größere Ringbreite aufweist als der Außenring. Der Außenring ist in einer umlaufenden Nut des Innenrings gelagert. Eine Drehung ist damit nur um eine Achse möglich. Ferner können Innen- und Außenring nicht ohne Werkzeuge voneinander gelöst und miteinander verbunden werden.

Aus der US-A-1 936 604 ist ein Schmuckring mit einem Innenring und einem Außenring bekannt, die über Achsstummel drehbar miteinander verbunden sind. Eine Drehung ist damit nur um die durch die Achsstummel vorgegebene Achse möglich. Ferner können Innenring und Außenring nicht ohne Werkzeuge voneinander gelöst und miteinander verbunden werden.

Der Erfindung liegt die Aufgabe zugrunde, einen Schmuckring mit einem Außenring und einem Innenring zur Verfügung zu stellen, bei dem der Außenring und der Innenring im nicht am Körper einer Person getragenen Zustand ohne Werkzeuge voneinander lösbar sind, und bei dem sich Außenring und Innenring während des Tragens nicht selbsttätig voneinander lösen können.

Diese Aufgabe wird durch einen Schmuckring mit den Merkmalen des Anspruchs 1 gelöst. Der Außenring weist an seiner Innenseite eine Wölbung nach außen auf. Die Innenring weist an seiner Außenseite eine entsprechende Wölbung auf. Beide Wölbungen sind qualitativ identisch. Sie unterscheiden sich quantitativ um einige wenige Prozent, um zu gewährleisten, dass sich der Innenring in dem Außenring frei drehen kann. Die Breite von Innenring und Außenring kann dabei unterschiedlich sein. Ist der Innenring breiter als der Außenring, so steht im zusammengefügten Zustand stets ein Abschnitt des Innenrings über den Außenring über. Ein Teil des Innenrings ist daher stets sichtbar unabhängig von seiner Ausrichtung relativ zum Außenring. Um Innenring und Außenring zusammenzufügen und voneinander lösen zu können, sind an der Innenseite des Außenrings diametral gegenüberliegend zwei Vertiefungen vorgesehen. Sie erstrecken sich von einer der beiden Kanten bzw. einem der beiden Ränder des Außenrings bis in den Bereich mit dem größten Innendurchmesser des Außenrings. Der Abstand zwischen den beiden Vertiefungen ist um mindestens 0,1 % größer als der Außendurchmesser des Innenrings. Dies gilt für den größten Außendurchmesser des Innenrings, das heißt im Maximum der Wölbung nach außen. Bei der Vertiefung kann es sich je nach der Form des Innenrings um eine Rinne, Mulde, Furche oder Senke handeln. Die Breite der Vertiefungen ist geringfügig größer als die Breite des Innenrings. Typischerweise ist die Breite der Vertiefungen um mindestens 0,1 % größer als die Breite des Innenrings. Durch die auf den Innenring abgestimmte Breite und den Abstand wird gewährleistet, dass der Innenring in die Vertiefungen geschoben und aus den Vertiefungen gezogen werden kann, ohne dass der Innenring dabei verkanten und sich festsetzen kann.

Der Innenring wird zum Verbinden mit dem Außenring senkrecht zum Außenring ausgerichtet und in die beiden Vertiefungen an der Innenseite des Außenrings eingeschoben. Dabei bildet ein Teil der Wölbung an der Innenseite des Außenrings einen Anschlag. Ist der Innenring bis zu diesem Anschlag in den Außenring eingeschoben, kann er in beliebiger Weise gegenüber dem Außenring gedreht werden. Wird der Innenring gegenüber dem Außenring so weit gedreht, dass er nicht mehr an den beiden Vertiefungen positioniert ist, kann er beliebig gedreht werden, ohne dass sich die beiden Ringe voneinander lösen können. Sie werden aufgrund der Wölbung der Innenseite des Außenrings und der entsprechenden Wölbung der Außenseite des Innenrings gehalten. Werden Innen- und Außenring gleich ausgerichtet, kann der Schmuckring auf einen Finger oder ein Handgelenk des Trägers aufgesteckt werden. Da ein Lösen des Innenrings vom Außenring nur möglich ist, wenn der Innenring senkrecht zum Außenring ausgerichtet ist und in den beiden Vertiefungen liegt, ist ein selbsttätiges Lösen des Außenrings vom Innenring während des Tragens des Schmuckrings nicht möglich. Die zum Lösen notwendige Einstellung zwischen Innenring und Außenring kann während des Tragens des Schmuckrings nicht eingenommen werden.

Zum Lösen und Zusammenfügen von Innenring und Außenring sind keine Werkzeuge notwendig. Ferner müssen keine großen Kräfte aufgebracht und keine besondere Fertigkeit angewandt werden. Der Schmuckring besteht lediglich aus dem Innen- und dem Außenring. Weitere Bauteile, sind nicht notwendig, um den Innenring am Außenring zu halten. Insbesondere sind einander zugewandte Oberflächen an der Innenseite des Außenrings und der Außenseite des Innenseite frei von über die Oberfläche vorstehenden Elementen, wie beispielsweise Achsstummel, Stifte oder Bolzen. Die Innenseite des Innenrings kann beliebig geformt sein. Besonders geeignet ist eine Wölbung nach innen, die das Aufstecken auf einen Finger oder ein Handgelenk erleichtert. Der Innenring kann auch ohne Außenring getragen werden, da er keine besonderen Merkmale aufweist, die das Verbinden mit dem Außenring ermöglichen.

Nach einer vorteilhaften Ausgestaltung der Erfindung weisen die beiden Vertiefungen von der Kante des Außenrings bis zu dem Bereich mit dem größten Innendurchmesser des Außenrings einen Verlauf parallel zur zentralen Achse des Außenrings auf. Die zentrale Achse erstreckt sich in Richtung des Fingers, auf den der Schmuckring aufgesteckt wird. Sie bildet die Mitte aller Durchmesser des Außenrings. Senkrecht zu dieser zentralen Achse verlaufen die Diametralebenen des Außenrings. Der Verlauf der beiden Vertiefungen ist damit auch senkrecht zu den Diametralebenen des Außenrings. Diese Ausrichtung der Vertiefungen ermöglicht ein besonders einfaches Einführen und Lösen des Innenrings vom Außenring. Ferner ist die Länge der Vertiefungen in diesem Fall kleiner als bei einer Neigung der Vertiefungen gegenüber den Diametralebenen.

Nach einer weiteren vorteilhaften Ausgestaltung der Erfindung können Innenring und Außenring beispielsweise aus Gold, Silber, Platin, Palladium, Edelstahl, Titan, Kunststoff, Keramik, Holz oder Glas hergestellt werden. Insbesondere können Innenring und Außenring aus unterschiedlichen Materialien bestehen. Darüber hinaus können der Innenring und der Außenring mit Schmucksteinen, beispielsweise Edelsteinen und Diamanten ausgestattet sein. Dabei ist darauf zu achten, dass die Schmucksteine nicht über die einander zugewandten Oberflächen von Innen- und Außenring überstehen, um die freie Rotation der beiden Ringe nicht zu beeinträchtigen. Breite und Dicke von Innen- und Außenring können beliebig gewählt werden. Die Außenseite des Außenrings und die Innenseite des Innenrings können in beliebiger Weise gestaltet sein. Darüber hinaus können auf der Außenseite des Innenrings beliebige Gestaltungen angebracht sein, die nicht über die Oberfläche überstehen. Dabei kann es sich beispielsweise um Gravuren, Beschichtungen oder in die Oberfläche versenkte Schmucksteine handeln.

Die Vertiefungen bilden an der Innenseite des Außenrings eine bis zum Bereich des größten Innendurchmessers des Außenrings reichende Aussparung, die mit Blick auf die Außenseite des Außenrings nicht erkennbar ist. Da die Aussparungen bis zu einer der beiden Kanten des Außenrings reichen, können sie lediglich bei zusammengefügtem Schmuckring durch Aufsicht auf die entsprechende Kante eingesehen werden.

Nach einer vorteilhaften Ausgestaltung der Erfindung ist der Übergang zwischen den Vertiefungen und der übrigen Oberfläche an der Innenseite des Außenrings kantenfrei ausgebildet. Dies ermöglicht ein besonders einfaches Einführen des Innenrings in den Außenring, ohne dass es zu einer Verkantung kommen kann. Ferner werden Verletzungen an den Kanten vermieden.

Nach einer weiteren vorteilhaften Ausgestaltung der Erfindung können die beiden Vertiefungen trichterförmig ausgebildet sein, so dass die Breite der Vertiefungen an der Kante bzw. am Rand des Außenrings größer ist als im Bereich mit dem größten Innendurchmesser des Außenrings. Dies erleichtert das Zusammenfügen von Innen- und Außenring. Darüber hinaus kann die Breite der Vertiefungen vom Rand des Außenrings bis zum Bereich mit dem größten Innendurchmesser des Außenrings identisch sein.

Weitere Vorteile und vorteilhafte Ausgestaltungen der Erfindung sind den Ansprüchen, der Zeichnung und der nachfolgenden Beschreibung zu entnehmen.

### Zeichnung

In der Zeichnung ist ein Ausführungsbeispiel des erfindungsgemäßen Schmuckrings dargestellt. Es zeigen:
- Figur 1: perspektivische Darstellung eines ersten Ausführungsbeispiels eines Schmuckringes mit gleich ausgerichteten Innen- und Außenring,
- Figur 2: Schmuckring gemäß Figur 1 in perspektivischer Darstellung mit relativ zum Außenring 2 senkrecht ausgerichtetem Innenring 1,
- Figur 3: Schmuckring gemäß Figur 1 in einer Ansicht von oben,
- Figur 4: Schmuckring gemäß Figur 1 in Schnittdarstellung, Schnitt entlang der in Figur 3 mit B-B gekennzeichneten Ebene,
- Figur 5: Schmuckring gemäß Figur 1 in einer Ansicht von unten,
- Figur 6: Schmuckring gemäß Figur 1 in Schnittdarstellung, Schnitt entlang der in Figur 5 mit A-A gekennzeichneten Ebene,
- Figur 7: Detail aus Figur 5,
- Figur 8: Detail aus Figur 6,
- Figur 9: Detail eines zweiten Ausführungsbeispieles eines Schmuckringes in einer Darstellung analog zu Figur 7 des ersten Ausführungsbeispieles.

### Beschreibung der Ausführungsbeispiele

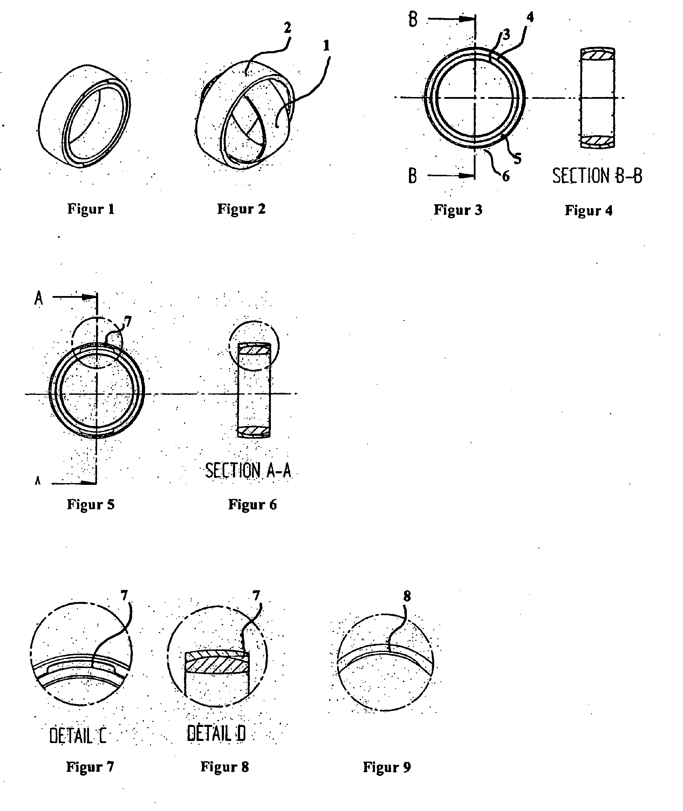

In den Figuren 1 bis 8 ist ein erstes Ausführungsbeispiel eines Schmuckrings in verschiedenen Ansichten dargestellt. Der Schmuckring besteht aus einem Innenring 1 und einem Außenring 2. Der Außenring ist an seiner Innenseite mit zwei Vertiefungen 7 versehen. Die beiden Vertiefungen 7 sind identisch ausgebildet und liegen einander gegenüber, so dass sie an der Innenseite des Außenrings 2 den größtmöglichen Abstand voneinander aufweisen. Der Abstand als Winkel im Bezug auf den Vollkreis des Außenrings beträgt 180°. Die Innenseite 5 des Außenrings 2 ist nach außen gewölbt. Die Außenseite 6 des Außenrings 2 ist nach außen gewölbt.

Das Profil der Innenseite 3 des Innenrings 1 weist eine Wölbung nach innen auf. Diese Form erleichtert das An- und Ausziehen des Schmuckrings. Der Innenring 1 kann auch ohne den Außenring 2 getragen werden. Die Außenseite 4 des Innenrings 1 weist eine Wölbung nach außen auf mit einem vorgegebenen Radius. Diese Wölbung ist an die Wölbung der Innenseite 5 des Außenrings 2 derart angepasst, dass der Außenring 2 und der Innenring 1 in dem in Figur 1 dargestellten zusammengefügten Zustand formschlüssig ineinander liegen. Außenring 2 und Innenring 1 sind gegeneinander gekontert. Das Spiel zwischen dem Außenring und dem Innenring beträgt bei dem Ausführungsbeispiel ca. 10%. Die Radien der Wölbung der Innenseite 5 des Außenrings 2 und der Außenseite 4 des Innenrings 1 sind damit nahezu identisch.

Alle Angaben bezüglich der Wölbung sind dabei bezogen auf den durch die beiden kreisrunden Ringe definierten Mittelpunkt. Dieser ist in Figur 3 als Schnittpunkt zweier senkrechter Linien markiert.

Figur 2 zeigt den Schmuckring mit einem Winkel von 90° zwischen dem Innenring 1 und dem Außenring 2. In dieser Stellung wird der Innenring 1 in den Außenring 2 gesteckt. Hierzu wird der Innenring 1 in die beiden Vertiefungen 7 an der Innenseite 5 des Außenrings 2 eingeführt. Die beiden Vertiefungen 7 sind in den Figuren 5, 6, 7 und 8 erkennbar. Die Tiefe der beiden Vertiefungen 7 gegenüber der übrigen Innenseite 5 des Außenrings 2 ist so gewählt, dass der räumliche Abstand der beiden Vertiefungen dem Außendurchmesser des Innenrings entspricht. Die Breite der beiden Vertiefungen 7 entspricht der Breite des Innenrings 1. Die beiden Vertiefungen 7 erstrecken sich damit über einen gewissen Abschnitt an der Innenseite des Außenrings 2. Sie folgen in diesem Abschnitt der Kreisform des Außenrings. Die Wölbung der Außenseite 4 des Innenrings kann auf diese Kreisform abgestimmt sein.

Da die beiden Vertiefungen 7, wie in den Figuren 6 und 8 dargestellt, nur von der Kante bis zur Hälfte der Innenseite des Außenrings 2 beziehungsweise bis zu der Mitte der Breite des Außenrings 2 reichen, kann der Innenring 1 nicht beliebig weit in den Außenring eingeschoben werden. Die übrige Innenseite 5 des Außenrings 2 bildet einen Anschlag. In Figur 1 ist der Innenring 1 bis zu diesem Anschlag in den Außenring 2 eingeschoben. In dieser Position befindet sich der Innenring 1 zur Hälfte im Außenring 2. Wird durch die beiden Schnittpunkte von Innenring 1 und Außenring 2 eine Gerade gelegt, so teilt diese die beiden Ringe jeweils in zwei halbe Ringe welche einem Halbkreis entsprechen. Die Gerade entspricht der Drehachse, um die der Innenring 1 gedreht wird, um in die in Figur 1 dargestellte Position zu gelangen. Auf entsprechende Weise wird der Innenring 1 von dem Außenring getrennt.

Der Innenring 1 und der Außenring 2 haben gerade soviel Spiel, dass sie in dem zusammengefügten Zustand beliebig relativ zueinander gedreht werden können. Eine Rotation ist um jede beliebige Achse möglich. Aufgrund der Wölbung der Innenseite des Außenrings und der Außenseite des Innenrings wird der Innenring im Außenring gehalten. Ein Lösen des Innenrings vom Außenring ist nur in der in Figur 2 dargstellten Einstellung möglich, wenn der Innenring in den Vertiefungen des Außenrings liegt. Da der Schmuckring beim Tragen durch eine Person auf einen Finger aufgesteckt ist und die zum Lösen notwendige Einstellung nicht einnehmen kann, können sich Innenring und Außenring nicht ungewollt voneinander trennen. Hierzu muss der Schmuckring vom Finger abgenommen werden. Jedoch kann sich der Außenring gegenüber dem Innenring beim Tragen drehen, wodurch der Schmuckring sein Aussehen verändert und je nach Einstellung unterschiedliche Bereiche des Innenrings sichtbar sind.

Die Außenseiten des Innenrings 1 und des Außenrings 2 können in beliebiger Weise gestaltet sein. Dabei ist lediglich zu beachten, dass die Außenseite 4 des Innenrings 1 die an die Innenseite 5 des Außenrings 2 angepasste Wölbung aufweist. Die Gestaltung der Außenseite des Innenrings darf daher nicht dazu führen, dass Teile über die übrige Oberfläche überstehen. Zur Gestaltung eignen sich beispielsweise Gravuren oder in die Oberfläche versenkte Schmucksteine oder Diamanten.

In Figur 9 ist ein Detail eines zweiten Ausführungsbeispieles eines Schmuckrings dargestellt. Der einzige Unterschied zu dem ersten Ausführungsbeispiel gemäß den Figuren 1 bis 8 besteht in der Form der Vertiefungen 8. Diese sind kantenfrei ausgebildet. Die Übergänge zwischen der Vertiefung 8 und der übrigen Innenseite der Außenrings sind abgerundet. Im Unterschied dazu sind die Vertiefungen 7 des Schmuckrings gemäß erstem Ausführungsbeispiel, wie in Figur 7 dargestellt, mit Kanten versehen.

Sämtliche Merkmale der Erfindung können sowohl einzeln als auch in beliebiger Kombination miteinander erfindungswesentlich sein.

### Bezugszahlenliste

- 1: Innenring
- 2: Außenring
- 3: Innenseite des Innenrings
- 4: Außenseite des Innenrings
- 5: Innenseite des Außenrings
- 6: Außenseite des Außenrings
- 7: Vertiefung
- 8: Vertiefung

## Patentansprüche

1. Schmuckring aus mindestens zwei Teilen
mit einem Außenring (2) als erstes Teil,
mit einem gegenüber dem Außenring drehbaren Innenring (1) als zweites Teil, wobei eine nach innen weisende Oberfläche des Außenrings (2) und eine nach außen weisende Oberfläche des Innenrings (1) vorgesehen sind, die frei von über die Oberflächen hervorstehenden Elementen sind,
und der Innenring gegenüber dem Außenring um mehrere Achsen drehbar ist, **dadurch gekennzeichnet**
**dass** der Innenring (1) vom Außenring (2) ohne Werkzeuge lösbar und mit dem Außenring ohne Werkzeuge verbindbar ist,
**dass** eine Wölbung nach außen an der Innenseite (5) des Außenrings (2) vorgesehen ist,
**dass** eine qualitativ identische Wölbung nach außen an der Außenseite (4) des Innenrings (1) vorgesehen ist, eine nach innen weisende Oberfläche des Außenrings (2) und eine nach außen weisende Oberfläche des Innenrings (1) vorgesehen sind, die frei von über die Oberflächen hervorstehenden Elementen sind,
**dass** zwei Vertiefungen (7, 8) diametral gegenüberliegend an der Innenseite (5) des Außenrings (2) vorgesehen sind, welche sich beide von einer der beiden Kanten des Außenrings bis zu dem Bereich mit dem größten Innendurchmesser des Außenrings erstrecken,
**dass** eine Abstand zwischen den Vertiefungen (7, 8) vorgesehen ist, der größer ist als der Außendurchmesser des Innenrings (1), und
**dass** eine Breite der Vertiefungen (7, 8) am Rand des Außenrings und im Bereich mit dem größten Innendurchmesser des Außenrings vorgesehen ist, die größer ist als die Breite des Innenrings (1).

2. Schmuckring nach Anspruch 1, **dadurch gekennzeichnet, dass** die beiden Vertiefungen (7, 8) von der Kante des Außenrings (2) bis zu dem Bereich mit dem größten Innendurchmesser des Außenrings (2) einen Verlauf senkrecht zu den Diametralebenen des Außenrings aufweisen.

3. Schmuckring nach Anspruch 1 oder 2, **dadurch gekennzeichnet, dass** der Übergang zwischen den Vertiefungen (8) und der übrigen Oberfläche an der Innenseite (5) des Außenrings (2) kantenfrei ausgebildet ist.

4. Schmuckring nach Anspruch 1 oder 2, **dadurch gekennzeichnet, dass** die Vertiefungen (7, 8) mit Blick auf die Außenseite des Außenrings (2) unsichtbar sind.

5. Schmuckring nach einem der vorhergehenden Ansprüche, **dadurch gekennzeichnet, dass** die Vertiefungen (7, 8) eine der Außenseite (4) des Innenrings (1) qualitativ identische Wölbung aufweisen.

6. Schmuckring nach einem der Ansprüche 1 bis 4, **dadurch gekennzeichnet, dass** der Boden der Vertiefungen (7, 8) einen flachen, ebenen Verlauf aufweist.

7. Schmuckring nach einem der vorhergehenden Ansprüche, **dadurch gekennzeichnet, dass** die Vertiefungen (7, 8) trichterförmig ausgebildet sind.

8. Schmuckring nach einem der vorhergehenden Ansprüche, **dadurch gekennzeichnet, dass** an der Außenseite (4) des Innenrings (1) in die Oberfläche Schmucksteine und/ oder Edelsteine versenkt sind.

## Claims

1. Decorative ring made of at least two parts
with one outer ring (2) as the first part,
with one inner ring (1) which can be turned opposite the outer ring as the second part, whereby an inward-pointing surface of the outer ring (2) and an outward-pointing surface of the inner ring (1) are provided, which are free of elements projecting over the surfaces,
and the inner ring can be turned opposite the outer ring on several axes, **characterised in that**
the inner ring (1) can be detached from the outer ring (2) without tools and can be attached to the outer ring without tools,
**in that** an outward curve is provided on the inner side (5) of the outer ring (2),
**in that** a qualitatively identical outward curve is provided on the outer side (4) of the inner ring (1),
**in that** two diametrically opposed recesses (7, 8) are provided on the inner side (5) of the outer ring (2), which both extend from one of the two sides of the outer ring to the area with the largest inner diameter of the outer ring,
**in that** a distance between the recesses (7, 8) is provided which is greater than the outer diameter of the inner ring (1), and
**in that** a width of the recesses (7, 8) is provided at the edge of the outer ring and in the area with the largest inner diameter of the outer ring which is greater than the width of the inner ring (1).

2. Decorative ring according to claim 1, **characterised in that** both recesses (7, 8) run vertically to the diametrical planes of the outer ring from the edge of the outer ring (2) to the area with the largest inner diameter of the outer ring (2).

3. Decorative ring according to claim 1 or 2, **characterised in that** the junction between the recesses (8) and the rest of the surface is designed without edges at the inner side (5) of the outer ring (2).

4. Decorative ring according to claim 1 or 2, **characterised in that** the recesses (7, 8) are unseen when looking at the outer side of the outer ring (2).

5. Decorative ring according to one of the previous claims, **characterised in that** the recesses (7, 8) have a curve qualitatively identical to the outer side (4) of the inner ring (1).

6. Decorative ring according to claims 1 to 4, **characterised in that** the bottom of the recesses (7, 8) runs flat and level.

7. Decorative ring according to one of the previous claims, **characterised in that** the recesses (7, 8) are funnel shaped.

8. Decorative ring according to one of the previous claims, **characterised in that** gemstones and/or precious stones are sunk into the surface on the outer side (4) of the inner ring (1).

## Revendications

1. Anneau décoratif se composant d'au moins deux pièces
un anneau extérieur (2) formant la première pièce,
un anneau intérieur (1) rotatif par rapport à l'anneau extérieur formant la seconde pièce, la surface orientée vers l'intérieur de l'anneau extérieur (2) et la surface orientée vers l'extérieur de l'anneau intérieur (1) étant dépourvues d'éléments faisant saillie,
l'anneau intérieur pouvant tourner sur plusieurs axes par rapport à l'anneau extérieur, **caractérisé en ce que**
l'anneau intérieur (1) peut être détaché de l'anneau extérieur (2) sans outil et attaché à l'anneau extérieur sans outil,
la face intérieure (5) de l'anneau extérieur (2) présente un arrondi concave,
la face extérieure (4) de l'anneau intérieur (1) présente un arrondi convexe épousant la forme de l'arrondi concave,
la face intérieure (5) de l'anneau extérieur (2) présente deux évidements (7, 8) diamétralement opposés, ces deux évidements s'étendant de l'un des deux bords de l'anneau extérieur jusqu'à la zone présentant le plus grand diamètre intérieur de l'anneau extérieur,
la distance entre les évidements (7, 8) est supérieure au diamètre extérieur de l'anneau intérieur (1) et que
la largeur des évidements (7, 8) sur le bord de l'anneau extérieur et dans la zone présentant le plus grand diamètre intérieur de l'anneau extérieur est supérieure à la largeur de l'anneau intérieur (1).

2. Anneau décoratif selon la revendication 1, **caractérisé en ce que** les deux évidements (7, 8) allant du bord de l'anneau extérieur (2) à la zone présentant le plus grand diamètre intérieur de l'anneau extérieur (2) s'étendent perpendiculairement aux plans diamétraux de l'anneau extérieur.

3. Anneau décoratif selon la revendication 1 ou 2, **caractérisé en ce que** la zone de transition entre les évidements (8) et le reste de la surface de la face intérieure (5) de l'anneau extérieur (2) ne présente aucune arête.

4. Anneau décoratif selon la revendication 1 ou 2, **caractérisé en ce que** les évidements (7, 8) sont invisibles lorsque le regard est dirigé sur la face extérieure de l'anneau extérieur (2).

5. Anneau décoratif selon l'une des revendications précédentes, **caractérisé en ce que** les évidements (7, 8) présentent un arrondi épousant la forme de la face extérieure (4) de l'anneau intérieur (1).

6. Anneau décoratif selon l'une des revendications 1 à 4, **caractérisé en ce que** le fond des évidements (7, 8) est lisse et plan.

7. Anneau décoratif selon l'une des revendications précédentes, **caractérisé en ce que** les évidements (7, 8) sont en forme d'entonnoir.

8. Anneau décoratif selon l'une des revendications précédentes, **caractérisé en ce que** des pierres fines et/ou des pierres précieuses sont incrustées dans la surface de la face extérieure (4) de l'anneau intérieur (1).
